# EUROPEAN PATENT SPECIFICATION

(11) **EP 3 443 048 B1**
(45) Date of publication and mention of the grant of the patent: **14.07.2021**
(21) Application number: 17719759.7
(22) Date of filing: 03.04.2017
(51) Int. Cl.: C09K 11/02, C08F 220/18, C09D 4/06, C09K 11/08, C09D 133/06

(54) **METHOD FOR PRODUCING ENCAPSULATED QUANTUM DOTS**
VERFAHREN ZUR HERSTELLUNG VON VERKAPSELTEN QUANTENPUNKTEN
PROCÉDÉ DE PRODUCTION DE POINTS QUANTIQUES ENCAPSULÉS

(30) Priority: 12.04.2016 US 201662321279 P
(43) Date of publication of application: 20.02.2019
(73) Proprietor: Dow Global Technologies, LLC, Midland, MI 48674 (US); Rohm and Haas Electronic Materials LLC, Marlborough, MA 01752 (US)
(72) Inventor: JOO, Jake, Marlborough MA 01752 (US); O'CONNELL, Kathleen M., Marlborough MA 01752 (US); CHEN, Liang, Midland MI 48674 (US); DERMODY, Daniel L., Midland MI 48674 (US); BAI, Zhifeng, Houston, TX 77059 (US); TAYLOR, James C., Marlborough MA 01752 (US)
(74) Representative: Houghton, Mark Phillip
(86) International application number: PCT/US2017/025734
(87) International publication number: WO 2017/180345

(56) References cited:
- WO-A1-97/41160
- US-A1- 2004 167 257
- US-A1- 2012 113 672
- US-A1- 2015 083 970
- MAOQUAN CHU ET AL: "Incorporating quantum dots into polymer microspheres via a spray-drying and thermal-denaturizing approach", NANOTECHNOLOGY, IOP, BRISTOL, GB, vol. 17, no. 6, 28 March 2006 (2006-03-28) , pages 1791-1796, XP020104617, ISSN: 0957-4484, DOI: 10.1088/0957-4484/17/6/041
- JAN ZIEGLER1 ET AL: "Silica-Coated InP/ZnS Nanocrystals as Converter Material in White LEDs", ADVANCED MATERIALS, WILEY-VCH GERMANY, DE, vol. 20, no. 21, 3 November 2008 (2008-11-03), pages 4068-4073, XP002637237, ISSN: 0935-9648, DOI: 10.1002/ADMA.200800724 [retrieved on 2008-10-13]

## Description

### FIELD OF THE INVENTION

The present invention relates to a method for producing encapsulated quantum dots.

### BACKGROUND OF THE INVENTION

Semiconductor quantum dots (QD) provide optical absorption and emission (photoluminescence PL or electroluminescence EL) behaviors that are significantly different from those of bulk materials. As the particle size decreases, effective energy bandgap (Eg), or available energy levels, increases and creates a blue shifted PL spectrum. This spectrum tunability by the particle size dependent quantum confinement effect within the same material is a critical advantage over conventional bulk semiconductors. Because of their unique optical properties, QD have been of great interest in many display and lighting applications. Most QD have inorganic shells with a larger bandgap material to confine electron and hole pairs within the core region and prevent any surface charge states. The outer shells are then capped by organic ligands to reduce trap states of the shell that can lead to reduced quantum yield (QY). Organic ligands help QD to disperse in organic/aqueous solvents. Typical organic ligands surrounding QD have relatively long alkyl chains which provide high solubility in non-polar solvents or monomers. Unfortunately, QD are very susceptible to photo-oxidation during light absorption/conversion process. Also, moisture can have similar impacts when ligands are not compatible with solvents or monomers. QD typically are encapsulated in a polymer matrix to protect them from adverse effects of water and oxygen. For example, US8859442 discloses encapsulated quantum dots in polymer matrices. However, this reference does not disclose the method described herein.

Chu et al., in Nanotechnology 17 (2006) 1791-1796 disclose "Incorporating quantum dots into polymer microspheres via a spray-drying and thermal-denaturizing approach".

### SUMMARY OF THE INVENTION

The present invention provides a method for encapsulating quantum dots. The method comprises steps of: (a) mixing quantum dots with a polymer having a weight average molecular weight from 1,000 to 200,000 and a solubility parameter from 14 to 18.75 (J/cm³)^{1/2}, and a C₆-C₁₀ aromatic hydrocarbon solvent to form a mixture; (b) spray drying the mixture to produce an encapsulated quantum dot powder with a particle size from 1-10 micron; wherein the polymer comprises polymerized units of a compound chosen from isobornyl (meth)acrylate, C₂-C₁₈ alkyl (meth)acrylates, L-menthyl acrylate, tricyclo[5.2.1.0^{2,6}]decylmethyl acrylate, C₁-C₆ alkylstyrenes, and 3,3,5-trimethylcyclohexyl methacrylate.

### DETAILED DESCRIPTION OF THE INVENTION

Percentages are weight percentages (wt%) and temperatures are in °C, unless specified otherwise. Operations were performed at room temperature (20-25 °C), unless specified otherwise. Boiling points are measured at atmospheric pressure (ca. 101 kPa). The term "(meth)acrylate" means acrylate or methacrylate. Quantum dots are well known in the art, see, e.g., US2012/0113672. Molecular weight is measured in Daltons and is the sum of the atomic weights for a monomeric compound and the weight-average molecular weight (Mw) for mixtures, e.g., oligomeric or polymeric compounds.

Preferably, the polymer has an acid value from 0 to 500 mg KOH/g; preferably no greater than 350, preferably no greater than 200. Preferably, the polymer has a molecular weight of at least 2,000, preferably at least 3,000; preferably no more than 200,000, preferably no more than 175,000, preferably no more than 150,000. Preferably, the polymer has a solubility parameter of at least 15 (J/cm³)^{1/2}; preferably at least 15.5; preferably no greater than 18.5, preferably no greater than 18.25. The polymer preferably has a glass transition temperature (T_{g}) or melting temperature of at least 50 °C, preferably at least 60 °C; preferably no greater than 200 °C, preferably no greater than 150 °C.

Preferably, the solvent has a solubility parameter from 14.5 to 18.5 (J/cm³)^{1/2}; preferably at least 14.75, preferably at least 15.0; preferably no greater than 18.25, preferably no greater than 18.0. The solvent is a C₆-C₁₀ aromatic hydrocarbon solvent. The solvent is aromatic, i.e., it contains at least one aromatic ring. If more than one solvent is used, the solubility parameter of the solvent mixture is the weight average of the solubility parameters of the individual solvents.

The polymer comprises polymerized units of compounds chosen from isobornyl (meth)acrylate, C₂-C₁₈ alkyl (meth)acrylates (e.g., isobutyl (meth)acrylate, 3,5,5-trimethylhexyl acrylate, dodecyl acrylate, decyl acrylate, tridecyl acrylate and isodecyl acrylate), L-menthyl acrylate, tricyclo[5.2.1.0^{2,6}]decylmethyl acrylate, C₁-C₆ alkylstyrenes, and 3,3,5-trimethylcyclohexyl methacrylate.

Preferably, the material which is spray dried, i.e., the mixture of quantum dots and solvent and the polymer, comprises from 0.001 to 2.4 wt% quantum dots; preferably at least 0.0025 wt%, preferably at least 0.005 wt%; preferably no more than 1.6 wt%, preferably no more than 0.8 wt%. Preferably, the material which is spray dried comprises from 1 to 30 wt% of the first polymer; preferably at least 3 wt%, preferably at least 5 wt%; preferably no more than 25 wt%, preferably no more than 20 wt%. Preferably, the material which is spray dried comprises from 50 to 99 wt% solvent; preferably at least 60 wt%, preferably at least 70 wt%; preferably no more than 97 wt%, preferably no more than 95 wt%.

Preferably, the spray drying is performed under inert atmosphere with an outlet temperature of <100 C, preferably < 80 °C; preferably <60 °C. Preferably, the spray dryer is equipped with a two fluid atomizer. Preferably, the dry powder has 0.1-10 micron average particle size, preferably at least 0.5 micron, preferably at least 1 micron; preferably no more than 8 micron, preferably no more than 6 micron.

The spray dried powder of encapsulated QDs is dispersed in liquid monomers with scattering agent and photo initiators and cured into solid films. The resin is physically stable and can be tested more easily.

### EXAMPLES

### Abbreviations used in Examples:

PiBOMA is polyisobornyl methacrylate (Mw= 100 kg/mol, T_{g} = 110 °C) from Scientific Polymer Products
PTBS: Poly(p-*tert*-butylstyrene) (T_{g} = 132 °C) from Scientific Polymer Products
COC 5013 is ethylene-norbornene copolymer (Mw= 80.5 kg/mol, T_{g} = 140 °C) from TOPAS
SMA EF-60 is styrene-maleic anhydride copolymer (Mw= 11.5 kg/mol, acid value = 156 KOH/g) from Cray Valley
HEA is 2-hydroxyethyl acrylate from Sigma-Aldrich, Inc.
SR494 is C{CH₂OCH₂CH₂OC(O)CH=CH₂}₄ from Sartomer, Inc.
1-819 is an IRGACURE photoactive polymerization initiator from Ciba-Geigy Corp.
FINEX 30S LP2 is ultrafine Zinc Oxide from Sakai Chemical Industry Co.

### Preparation of encapsulated QDs by spray drying

A typical spray drying condition is described below unless specified. A fountain two-fluid nozzle atomizer was equipped on a MOBILE MINOR spray dryer (GEA Process Engineering Inc.). The polymer/QDs solution was fed into spray dryer using a peristaltic pump (MASTERFLEX L/S). Inlet temp 80 °C and outlet temp 55 °C. Liquid feed rate = 10 mL/min (setting) and N₂ flow rate to nozzle atomizer = 1 bar 60% flow. The spray drying process produces a free-flowing QD polymer powder with well-controlled particle size of ∼5 micron where QDs is uniformly dispersed in the polymer matrix without aggregation

### PLQY measurement

PLQY was measured using an absolute PL quantum yield spectrometer (QUANTAURUS (C11347-01), Hamamatsu, Japan). Integrating sphere allows ∼99% reflection from 350 ∼ 1600 nm. Both incident and emitted photons have to undergo multiple reflections in order to reach detector (this helps eliminate optical anisotropy in the quantum yield measurement). Excitation wavelength is set at 450 nm and wavelength for PL is between 460 and 950 nm. Solution samples are placed at the center (transmission) of the integration sphere; film samples are placed at the bottom. Direct measurement of absolute PLQY is the ratio of # of photons emitted to # of photons absorbed

### Preparation of QD resin films

The film formulation was prepared in a oxygen-free environment (e.g. in a glovebox)
1. Monomers were degassed under vacuum for 1 hour
2. A solution of 50 wt% FINEX 30S LP2 in above monomers was prepared by using a speed mixer (FlackTek Inc, Landrum, SC))
3. A solution of 1.75 wt% 1-819 in above monomers was prepared by stirring the mixture at room temperature
4. Into the QD sample the I-819/monomers was introduced
6. FINEX 30S LP2 /monomers solution was mixed into above solution by using speed mixer
7. QDs film of ∼100 um was prepared by curing the monomers under UV (UVA, ∼400 mJ/cm²) sandwiched by two i-components barrier films for QY testing

### Example 1:

Solution PLQY of polymer with green QDs in toluene

| | **Solvent** | **QY (%)** | **Absorbance** | **Emission peak (nm)** | **FWHM (nm)** |
|---|---|---|---|---|---|
| 1 | Toluene | 72.4 | 0.106 | 535.4 | 43.1 |
| 2 | 10 wt% PiBOMA in toluene | 68.5 | 0.089 | 535.4 | 43.0 |
| 3 | 10 wt% ethylene-norbornene copolymer in toluene | 72.5 | 0.085 | 534.2 | 44.0 |
| 4 | 10 wt% PTBS in toluene | 62.8 | 0.090 | 536.6 | 43.1 |
| 5 | 10 wt% SMA EF-60 in toluene | 58.9 | 0.116 | 539.6 | 42.9 |

| | | | | | |
|---|---|---|---|---|---|
| * take 0.2 g of each solution (0.77 mg QD/mL) to a 1mL vial and then measure PL QY, PWL, FWHM at 450nm excitation using Hamamatsu absolute PL QY equipment | | | | | |

### Example 2: CF-QD®s in HEA/CN104 monomers

| | Sample 1 | Sample 2 | Sample 3 |
|---|---|---|---|
| 2-Hydroxy Ethyl Acrylate (HEA) | 97.5 wt% | 90 wt% | 97.5 wt% |
| PTBS/QD Powder 1 (8.75OD/g) | | 10 wt% | |
| PTBS/QD Powder 2 (43.75OD/g) | | | 2.5 wt% |
| QD in IBOA (35OD/g) | 2.5 wt% | | |

Red QDs in toluene: Manc11_ZA1 (151.2OD/mL (450nm excitation)
PTBS: M_{w}= 50-100 kg/mol, Tg=144 °C
QD powder specification
PTBS powder 1: 0.5 wt% red QDs (8.75 OD/g)
PtBSt powder 2: 2.5 wt% red QDs (43.75 OD/g)
Control sample QD in IBOA
2.098g of IBOA + QD in toluene 0.5mL (0.5 x 151.2 / 2.098 = 35 OD/g)

| Sample 1 | | | | |
|---|---|---|---|---|
| Time (hrs) | Absorption | PLQY | PWL | FWHM |
| 0 | 0.062 | 54 | 653.27 | 62.59 |
| 24 | 0.060 | 27 | 466.36 | 48.33 |

| Sample 2 | | | | |
|---|---|---|---|---|
| Time (hrs) | Absorption | PLQY | PWL | FWHM |
| 0 | 0.096 | 50 | 639.15 | 57.51 |
| 24 | 0.121 | 52.9 | 639.89 | 57.24 |

| Sample 3 | | | | |
|---|---|---|---|---|
| Time (hrs) | Absorption | PLQY | PWL | FWHM |
| 0 | 0.357 | 47.6 | 647.32 | 60.71 |
| 24 | 0.398 | 51.1 | 645.1 | 56.64 |

### Example 3 - CF-QD® in PIBOMA in HEA/SR-494 monomers

PiBOMA/QD encapsulated powder: 2wt% green QDs

### Encapsulated QD resin films:

| | Solvent/monomers | QDs | QY (%) | Absorbance | Emission peak (nm) | FWHM (nm) |
|---|---|---|---|---|---|---|
| A | HEA/SR494 (1:1) (2.25g)* | 0.75 g PiBOMA/QD powder | 57.4 | 0.1031 | 542.4 | 43.6 |
| | Cured resin film (3 OD/g, thickness= 103 µm) | | 45.3 | 0.1366 | 538.7 | 45.1 |
| B (comp) | HEA/SR494 (1:1) (2.83 g)* | 0.17 g QDs in IBOA (0.085 wt%) | 52.3 | 0.0760 | 551.1 | 41.9 |
| | Cured resin film (3 OD/g, thickness = 108 µm) | | 36.8 | 0.1344 | 549.4 | 43.9 |

| | | | | | | |
|---|---|---|---|---|---|---|
| * Both formulations contain 1.5 wt% 1-819 and 2.125 wt% Finex 30S LP2 | | | | | | |

### Structure of SR494

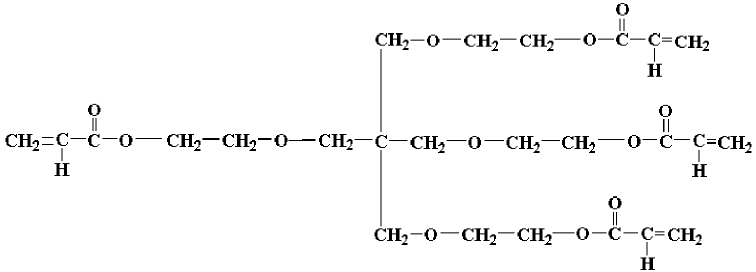

Encapsulated QDs show better QY retention in polar matrix and lower red shift of emission peak

### Age QD resin films at 60 °C/95% RH

| | QD Resin Film | QY (%) | Absorbance | Emission peak (nm) | FWHM (nm) |
|---|---|---|---|---|---|
| Film A, 3 OD/g | | | | | |
| 0 h | thickness=103 µm | 45.3 | 0.137 | 538.7 | 45.1 |
| 96 h | 92 µm | 43.8 | 0.125 | 537.1 | 45.5 |
| 216 h | 132 µm | 37.1 | 0.120 | 536.9 | 46.0 |

| Film B (control), 3 OD/g | | | | | |
|---|---|---|---|---|---|
| 0 h | Thickness=108 µm | 36.8 | 0.134 | 549.4 | 43.9 |
| 96 h | 103 µm | 30.9 | 0.104 | 546.2 | 42.4 |
| 216 h | 142 µm | 22.2 | 0.105 | 547.5 | 42.1 |

Film containing encapsulated QDs shows better retention of QY under the aging condition.

## Claims

1. A method for encapsulating quantum dots; said method comprising steps of:
(a) mixing quantum dots with a polymer having a weight average molecular weight from 1,000 to 200,000 and a solubility parameter from 14 to 18.75 (J/cm³)^{1/2} and a C₆-C₁₀ aromatic hydrocarbon solvent to form a mixture; and
(b) spray drying the mixture to produce an encapsulated quantum dot powder;
wherein the polymer comprises polymerized units of a compound chosen from isobornyl (meth)acrylate, C₂-C₁₈ alkyl (meth)acrylates, L-menthyl acrylate, tricyclo[5.2.1.0^{2,6}]decylmethyl acrylate, C₁-C₆ alkylstyrenes, and 3,3,5-trimethylcyclohexyl methacrylate.

2. The method of claim 1 in which the polymer has a T_{g} of 60 to 200 °C.

3. The method of claim 2 in which the solvent has a solubility parameter from 14.5 to 18.5 (J/cm³)^{1/2}.

4. The method of claim 3 in which the spray drying is performed in a spray dryer equipped with a two fluid nozzle atomizer.

5. The method of claim 4 in which the polymer has a solubility parameter from 14.5to 18.5 (J/cm³)^{1/2}.

6. The method of claim 5 in which the mixture of quantum dots and solvent and polymer comprises from 0.001 to 2.4 wt% quantum dots.

## Patentansprüche

1. Verfahren zum Verkapseln von Quantenpunkten; welches Verfahren die Schritte umfasst des:
(a) Mischens von Quantenpunkten mit einem Polymer, das ein gewichtsdurchschnittliches Molekulargewicht von 1.000 bis 200.000 und einen Löslichkeitparameter von 14 bis 18,75 (J/cm³)^{1/2} aufweist, und einem aromatischen C₆-C₁₀-Kohlenwasserstofflösungsmittel, um eine Mischung zu bilden; und
(b) Sprühtrocknens der Mischung, um ein verkapseltes Quantenpunktpulver herzustellen;
wobei das Polymer polymerisierte Einheiten einer Verbindung umfasst ausgewählt unter Isobornyl(meth)acrylat, C₂-C₁₈-Alkyl(meth)acrylaten, L-Menthylacrylat, Tricyclo[5.2.1.0^{2,6}]decylmethylacrylat, C₁-C₆-Alkylstyrolen und 3,3,5-Trimethylcyclohexylmethacrylat.

2. Verfahren nach Anspruch 1, wobei das Polymer eine T_{g} von 60 bis 200 °C aufweist.

3. Verfahren nach Anspruch 2, wobei das Lösungsmittel einen Löslichkeitsparameter von 14,5 bis 18,5 (J/cm³)^{1/2} aufweist.

4. Verfahren nach Anspruch 3, wobei das Sprühtrocknen in einem Sprühtrockner ausgeführt wird, der mit einem Zweifluiddüsenzerstäuber ausgestattet ist.

5. Verfahren nach Anspruch 4, wobei das Polymer einen Löslichkeitsparameter von 14,5 bis 18,5 (J/cm³)^{1/2} aufweist.

6. Verfahren nach Anspruch 5, wobei die Mischung von Quantenpunkten und Lösungsmittel und Polymer 0,001 bis 2,4 Gew.-% Quantenpunkte umfasst.

## Revendications

1. Procédé pour l'encapsulation de points quantiques; ledit procédé comprenant les étapes de:
(a) mélange de points quantiques avec un polymère présentant un poids moléculaire moyen en poids de 1.000 à 200.000 et un paramètre de solubilité de 14 à 18,75 (J/cm³)^{1/2} et un solvant hydrocarbure aromatique C₆-C₁₀ pour former un mélange; et
(b) séchage par atomisation du mélange pour produire une poudre de points quantiques encapsulés;
dans lequel le polymère comprend des unités polymérisées d'un composé choisi parmi le (méth)acrylate d'isobornyle, des (méth)acrylates de C₂-C₁₈ alkyle, l'acrylate de L-menthyle, l'acrylate de tricyclo[5.2.1.0^{2,6}]décylméthyle, des C₁-C₆ alkylstyrènes et le méthacrylate de 3,3,5-triméthylcyclohexyle.

2. Procédé selon la revendication 1, dans lequel le polymère a une T_{g} de 60 à 200 °C.

3. Procédé selon la revendication 2, dans lequel le solvant a un paramètre de solubilité de 14,5 à 18,5 (J/cm³)^{1/2}.

4. Procédé selon la revendication 3, dans lequel le séchage par atomisation est effectué dans un séchoir atomiseur équipé avec un atomiseur à deux buses de fluide.

5. Procédé selon la revendication 4, dans lequel le polymère a un paramètre de solubilité de 14,5 à 18,5 (J/cm³)^{1/2}.

6. Procédé selon la revendication 5, dans lequel le mélange de points quantiques et de solvant et de polymère comprend de 0,001 à 2,4% en poids de points quantiques.
